# EUROPÄISCHE PATENTANMELDUNG

(11) **EP 1 763 035 A2**
(43) Veröffentlichungstag der Anmeldung: **14.03.2007**
(21) Anmeldenummer: 06018845.5
(22) Anmeldetag: 08.09.2006
(51) Int. Cl.: G11B 33/02

(54) **Behälter für scheibenförmige Datenträger**

(30) Priorität: 12.09.2005 DE 202005014426 U
(71) Anmelder: Osterried, Martin, 87459 Pfronten (DE)
(72) Erfinder: Osterried, Martin, 87459 Pfronten (DE)
(74) Vertreter: Schwarz, Thomas

(57) **Zusammenfassung**

Die Erfindung betrifft einen Behälter für scheibenförmige Datenträger (9) mit zwei auf- bzw. zuklappbaren Behälterteilen (1, 2) und einem an der Innenseite der Behälterteile (1, 2) angeordneten Aufsteller (8), der zwei klappbar miteinander verbundene und an den beiden Behälterteilen verschwenkbar angebrachte Seitenteile (10, 11) zum Aufrichten der scheibenförmigen Datenträger (9) beim Öffnen des Behälters und zum Einklappen der scheibenförmigen Datenträger (9) beim Schließen des Behälters enthält. Um auf kostengünstige Weise auch ohne großen Platzbedarf die Aufnahme mehrerer Datenträger zu ermöglichen, ist in den beiden Seitenteilen (10, 11) jeweils mindestens eine seitliche Aufnahmeöffnung (18) für die scheibenförmigen Datenträger (9) vorgesehen und an den Seitenteilen (10, 11) ein Schutzelement (19) zur Verhinderung einer gegenseitigen Berührung der scheibenförmigen Datenträger (9) angeordnet.

## Beschreibung

Die Erfindung betrifft einen Behälter für scheibenförmige Datenträger nach dem Oberbegriff des Anspruchs 1.

Ein derartiger Behälter ist aus der DE 103 1.5 947 A1 bekannt. Dieser enthält zwei um eine erste Achse gegeneinander verschwenkbare Seitenteile und zwei um eine zweite Achse gegeneinander verschwenkbare Lagerteile, die über jeweils eine weitere Achse mit einem der Seitenteile schwenkbar verbunden sind. Die beiden Lagerteile sind einstückig ausgeführt und über eine Knickstelle miteinander verbunden. Im Bereich der Knickstelle ist eine einzige Aufnahmeöffnung für einen einzelnen scheibenförmigen Datenträger vorgesehen, der beim Öffnen der verschwenkbaren Seitenteile in eine vertikale Stellung gebracht wird. Für die Aufnahme mehrerer Datenträger wird bei diesem bekannten Behälter die Verwendung weiterer Abschnitte mit jeweils mindestens zwei weiteren Lagerteilen und einer weiteren Aufnahmeöffnung in Art einer Ziehharmonika vorgeschlagen. Dies ist jedoch mit einem erheblichen Fertigungsaufwand verbunden. Außerdem ist für die mehreren Abschnitte mit den in Form einer Ziehharmonika angeordneten Lagerteilen ein großer Platzbedarf innerhalb des Behälters erforderlich.

Aufgabe der Erfindung ist es, einen Behälter der eingangs genannten Art zu schaffen, der einfach und kostengünstig herstellbar ist und auch ohne großen Platzbedarf die Aufnahme von mehreren scheibenförmigen Datenträgern ermöglicht.

Diese Aufgabe wird durch einen Behälter mit den Merkmalen des Anspruchs 1 gelöst. Zweckmäßige Weiterbildungen und vorteilhafte Ausführungsformen der Erfindung sind Gegenstand der Unteransprüche.

Der erfindungsgemäße Behälter zeichnet sich dadurch aus, dass in den beiden Seitenteilen des Aufstellers jeweils mindestens eine seitliche Aufnahmeöffnung für die scheibenförmigen Datenträger vorgesehen ist. Dadurch können in dem Aufsteller zwei oder mehrere scheibenförmige Datenträger aufgenommen werden. An den Seitenteilen ist ein Schutzelement angebracht, durch das eine gegenseitige Berührung der Datenträger besonders beim Einführen in den Aufsteller vermieden und eine dadurch mögliche Beschädigung des Datenträgers verhindert wird. Der erfindungsgemäße Behälter ist relativ einfach und kostengünstig herstellbar. Er besteht aus zwei z.B. im Spritzgießverfahren einfach herstellbaren Einzelteilen, die auch schnell und einfach zusammengebaut werden können. An den beiden Seitenteilen können z.B. nach außen vorstehende Lagerzapfen vorgesehen sein, über die der Aufsteller in entsprechende Aufnahmen an den Behälterteilen in Art einer Rastverbindung eingesteckt werden kann.

In einer besonders zweckmäßigen Ausführung ist das Schutzelement in Form einer Lasche ausgebildet, die oberhalb der seitlichen Aufnahmeöffnung an dem Seitenteil angeformt ist und mit ihrem gegenüber einer Unterkante des Seitenteils vorstehenden freien Ende in eine Halterung an der Innenseite eines Verbindungsstegs zwischen den Behälterteilen eingesetzt ist. Durch das nach unten vorstehende Ende der Lasche wird diese beim Einsetzen des Aufstellers in den Behälter gebogen und erlangt dadurch eine Federeigenschaft, die zur Erzeugung einer Haltekraft dient. Durch die Lasche werden die Datenträger somit nicht nur vor gegenseitiger Berührung geschützt, sondern auch innerhalb der Aufnahmeöffnungen gehalten.

Neben den seitlichen Aufnahmeöffnungen in den beiden Seitenteilen kann der Aufsteller auch eine zentrale Aufnahmeöffnung im Bereich einer Klappkante zwischen den beiden Seitenteilen aufweisen. Dadurch können z.B. 3 CD's oder DVD's besonders platzsparend aufgenommen werden.

Die Aufnahmeöffnungen sind zweckmäßigerweise vieleckig ausgeführt oder abgerundet, damit die Datenträger möglichst nur in Randbereich zur Anlage mit den Seitenteilen gelangen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Behälter für scheibenförmige Datenträger in einer Perspektive; Verwendung;
- **Figur 2**: einen in den Behälter von **Figur** 1 einsetzbaren Aufsteller in einer Perspektive;
- **Figur 3**: den Aufsteller von Figur 2 in einer Vorderansicht;
- **Figur 4**: den Aufsteller von Figur 2 in einer Draufsicht;
- **Figur 5**: den Aufsteller von Figur 2 in einer Seitenansicht;
- **Figur 6**: eine vergrößerte Darstellung des Bereichs X von Figur 1;
- **Figur 7**: eine vergrößerte Darstellung des Bereichs Y von Figur 1;
- **Figur 8**: eine vergrößerte Darstellung des Bereichs W von Figur 1;
- **Figur 9**: eine vergrößerte Darstellung des Bereichs Z von Figur 1 und
- **Figur 10**: den Behälter mit eingebautem Aufsteller in einer Perspektive.

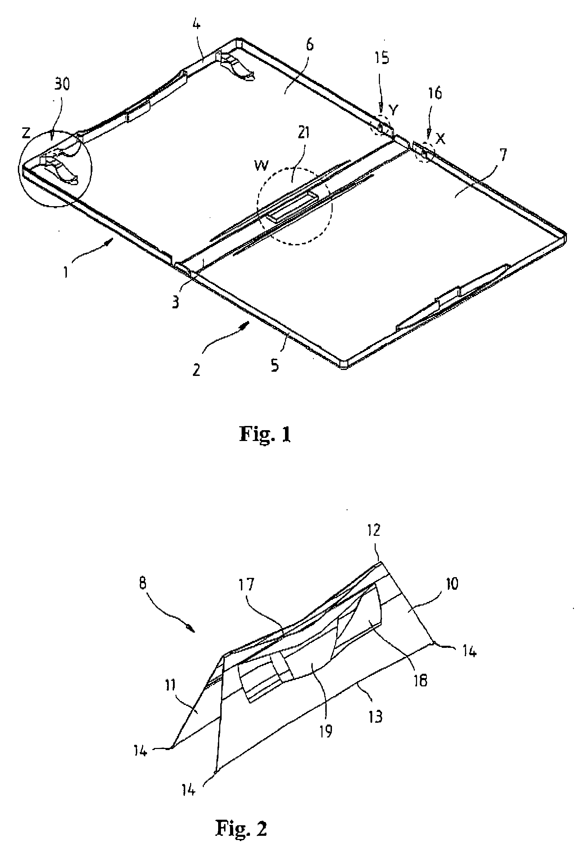

Der in Figur 1 schematisch dargestellte Behälter für scheibenförmige Datenträger enthält zwei im Wesentlichen identisch ausgebildete Behälterteile 1 und 2, die über ein in Art eines Buch- oder Einbandrückens ausgebildetes Verbindungsteil 3 auf- bzw. zuklappbar miteinander verbunden sind. Bei dem gezeigten Ausführungsbeispiel weisen die beiden Behälterteile 1 und 2 jeweils eine von einem Rand 4 und 5 umgebene Deck- oder Bodenplatte 6 bzw. 7 auf und sind zusammen mit dem Zwischensteg 3 aus einem thermoplastischen Kunststoff, vorzugsweise Polypropylen, hergestellt. Im zusammengeklappten Zustand bilden die beiden Behälterteile 1 und 2 zusammen mit dem einstückig angeformten Verbindungsteil 3 einen kastenförmigen Behälter zur Aufnahme von CD's, DVD's oder anderen scheibenförmigen Datenträgern.

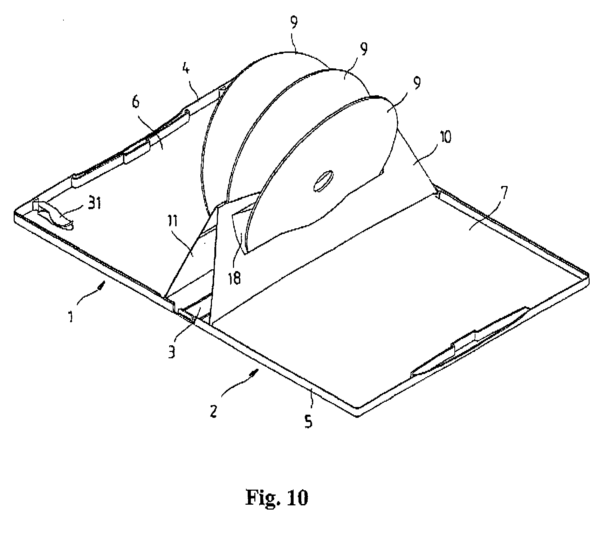

In den Behälter von Figur 1 wird ein in den Figuren 2 bis 5 dargestellter Aufsteller 8 eingesetzt. Wie in Figur 10 erkennbar, ist der Aufsteller 8 zur Aufnahme mehrerer scheibenförmiger Datenträger 9 ausgebildet und dient dazu, die Datenträger 9 beim Öffnen des Behälters aufzurichten. Dadurch können die Datenträger 9 einfach entnommen bzw. wieder eingesetzt werden. Beim Zusammenklappen der Behälterteile 1 und 2 werden die Datenträger 9 dagegen wieder automatisch umgelegt und in eine zu den Deck- oder Bodenplatten 6 bzw. 7 parallele Lage verbracht.

Wie besonders aus Figur 2 hervorgeht, enthält der Aufsteller 8 zwei trapezförmige Seitenteile 10 und 11, die an ihren kürzeren Oberkanten zusammen- und auseinanderklappbar miteinander verbunden sind. Die beiden Seitenteile 10 und 11 sind zweckmäßigerweise in einem Stück aus Kunststoff gefertigt und über eine Art Faltkante 12 miteinander verbunden. An ihren längeren Unterkanten 13 sind die Seitenteile 10 und 11 verschwenkbar an den Behälterteilen 1 und 2 angebracht. Hierzu weisen die Seitenteile 10 und 11 an den Ecken ihrer längeren Unterkanten 13 nach außen vorstehende Lagerzapfen 14 auf, die zum Einrasten in im Folgenden noch näher erläuterte und in Figur 1 erkennbare Aufnahmen 15 und 16 an der Innenseite der Behälterteile 1 und 2 ausgebildet sind.

In dem Aufsteller 8 ist im Bereich der Faltkante 12 eine sechseckige zentrale Aufnahmeöffnung 17 zum Einstecken eines ersten scheibenförmigen Datenträgers 9 vorgesehen. In den beiden Seitenteilen 10 und 11 des Aufstellers 8 sind zwei weitere symmetrisch angeordnete seitliche Aufnahmeöffnungen 18 zur Aufnahme zweier weiterer scheibenförmiger Datenträger 9 angeordnet. Die beiden seitlichen Aufnahmeöffnungen 18 sind achteckig ausgeführt und derart angeordnet, dass die eingesteckten Datenträger 9 bei der in Figur 10 gezeigten Offenstellung des Behälters gegenüber den Deck- oder Bodenplatten 6 und 7 z.B. unter einem Winkel von 60 - 80° geneigt sind. Der in die zentrale Aufnahmeöffnung 17 eingesetzte Datenträger 9 steht dagegen bei der in Figur 10 gezeigten Offenstellung des Behälters von den Deck- oder Bodenplatten 6 und 7 senkrecht nach oben. Die zentrale Aufnahmeöffnung 17 und auch die seitlichen Aufnahmeöffnungen 18 sind derart ausgestaltet, dass die eingesetzten Datenträger möglichst nur am Rand zur Anlage an den Seitenteilen 10 und 11 gelangen.

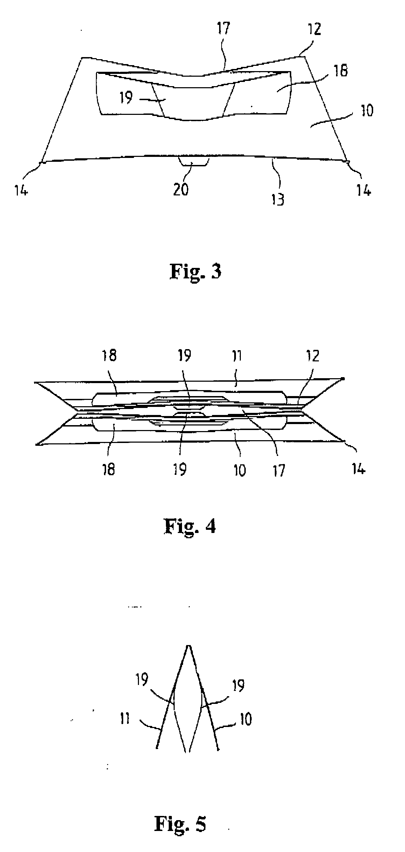

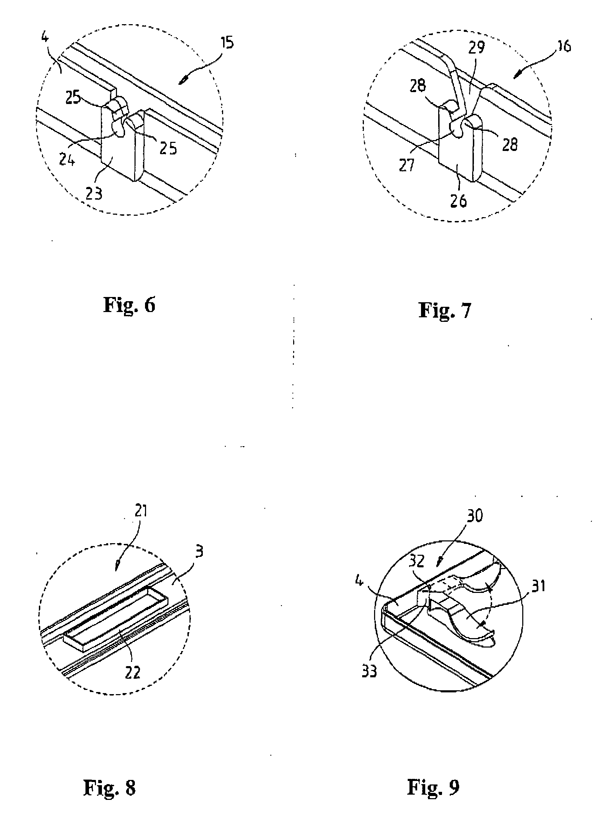

Im. Bereich der beiden seitlichen Aufnahmeöffnungen 18 ist an den beiden Seitenteilen 10 und 11 jeweils ein Schutzelement in Form einer nach unten ragenden Lasche 19 angeformt. Wie aus Figur 3 hervorgeht, weist die oberhalb der Aufnahmeöffnung 18 angeformte Lasche 19 eine nach unten abnehmende Breite auf und steht mit ihrer unteren Kante 20 gegenüber den unteren Längsseiten 13 nach unten vor. Bei dem Einbau des Aufstellers 8 in die beiden Behälterteile 1 und 2 wird das nach unten vorstehende Ende der Laschen 19 in eine in Figur 1 gezeigte und in Figur 8 vergrößert dargestellte Halterung 21 an der Innenseite des Verbindungsteils 3 eingesteckt. Dabei wird gewährleistet, dass die Laschen 19 beim Aufklappen des Behälters nach außen gebogen werden, wie dies in Figur 5 erkennbar ist. Die beiden Laschen 19 weisen durch die Biegung federnde Eigenschaften auf und erzeugen eine entsprechende Andrückkraft, durch welche die in die beiden seitlichen Aufnahmeöffnungen 18 eingesteckten scheibenförmigen Datenträger 9 innerhalb der Aufnahmeöffnungen 18 gehalten werden. Außerdem wird durch die Laschen 19 verhindert, dass die Datenträger 9 beim Einstecken miteinander in Berührung gelangen, was zu Beschädigungen und Datenverlust führen kann. Beim gezeigten Ausführungsbeispiel wird die Halterung 21 durch einen in Figur 8 vergrößert dargestellten rechteckigen Rahmen 22 gebildet, der an der Innenseite des Verbindungsteils 3 angeformt ist.

In den Figuren 6 und 7 sind jeweils die an den Behälterteilen 1 und 2 gegenüberliegend vorgesehenen Aufnahmen 15 und 16 zum Einstecken des Aufstellers 8 vergrößert dargestellt. Die in Figur 6 gezeigte Aufnahme 15 am Behälterteil 1 enthält einen an der Innenseite des Rands 4 angeformten Steg 23 mit einer Lagerschale 24 für den Lagerzapfen 14 und zwei nach innen vorstehenden Rastnasen 25, durch die der Lagerzapfen 14 in Art einer Rastverbindung innerhalb der Lagerschale 24 gehalten wird. Auch die in Figur 7 dargestellte Aufnahme 16 am Behälterteil 2 besteht aus einem an der Innenseite des Rands 5 angeformten Steg 26, der eine Lagerschale 27 und nach innen ragende Rastnasen 28 enthält. Im Gegensatz zur Aufnahme 15 ist hier im Rand 5 oberhalb der Lagerschale 27 eine V-förmige Einführungsnut 29 vorgesehen, durch welche das Einstecken des Aufstellers 8 erleichtert wird. Die Lagerzapfen 14 und die entsprechenden Lagerschalen 24 und 26 können unterschiedliche Durchmesser aufweisen, so dass der Aufsteller 8 nur in einer bestimmten Stellung eingesetzt werden kann.

Wie aus den Figuren 6 und 7 hervorgeht, sind die Lagerschalen 24 und 27 für die Drehzapfen 14 oberhalb der Deck- oder Bodenplatte 6 und 7 des Behälters angebracht, so dass sich zwischen dem Aufsteller 8 und der Deck- oder Bodenplatte 6 und 7 ein vorgegebener Abstand zur Aufnahme eines Booklets ergibt. Zur Halterung der Booklets können an einem oder beiden Behälterteilen 1 und 2 in Figur 9 vergrößert dargestellte Cliphalterungen 30 angebracht sein.

Die Besonderheit der in Figur 9 gezeigten Cliphalterung 30 besteht darin, dass sie eine seitlich verschwenkbare Haltezunge 31 enthält. Hierzu ist die federnde Haltezunge 31 über einen schmalen Verbindungssteg 32 mit dem Rand 4 des Behälterteils 1 verbunden. Der schmale Verbindungssteg 32 kann z.B. durch zwei seitliche Einkerbungen 33 an der Verbindung zwischen der Haltezunge 31 und dem Rand 4 des Behälterteils erreicht werden. Durch die seitliche Verschwenkbarkeit der Haltezunge 31 wird gewährleistet, dass das Booklet auch von oben in das Behälterteil 1 eingelegt werden kann.

## Patentansprüche

1. Behälter für scheibenförmige Datenträger (9) mit zwei auf- bzw. zuklappbaren Behälterteilen (1, 2) und einem an der Innenseite der Behälterteile (1, 2) angeordneten Aufsteller (8), der zwei klappbar miteinander verbundene und an den beiden Behälterteilen verschwenkbar angebrachte Seitenteile (10, 11) zum Aufrichten der scheibenförmigen Datenträger (9) beim Öffnen des Behälters und zum Emklappen der scheibenförmigen Datenträger (9) beim Schließen des Behälters enthält, **dadurch gekennzeichnet, dass** in den beiden Seitenteilen (10, 11) jeweils mindestens eine seitliche Aufnahmeöffnung (18) für die scheibenförmigen Datenträger (9) vorgesehen und an den Seitenteilen (10, 11) ein Schutzelement (19) zur Verhinderung einer gegenseitigen Berührung der scheibenförmigen Datenträger (9) angeordnet ist.

2. Behälter nach Anspruch 1, **dadurch gekennzeichnet, dass** das Schutzelement in Form einer federnden Lasche (19) ausgebildet ist, die oberhalb der seitlichen Öffnung (18) an dem Seitenteil (10, 11) angeformt ist und mit ihrem gegenüber einer Unterkante (13) des Seitenteils (10, 11) vorstehenden freien Ende (20) in eine Halterung (21) an der Innenseite eines Verbindungsstegs (3) zwischen den Behälterteilen (1, 2) eingesetzt ist.

3. Behälter nach Anspruch 2, **dadurch gekennzeichnet, dass** die Halterung (21) durch einen an der Innenseite des Verbindungsstegs (3) angeformten Rahmen (22) gebildet wird.

4. Behälter nach einem der Ansprüche 1 bis 3, **dadurch gekennzeichnet, dass** in dem Aufsteller (8) im Bereich einer Klappkante (12) zwischen den beiden Seitenteilen (10,11) eine zentrale Aufnahmeöffnung (17) vorgesehen ist.

5. Behälter nach einem der Ansprüche 1 bis 4, **dadurch gekennzeichnet, dass** die Seitenteile (10, 11) des Aufstellers (8) an den Ecken ihrer Unterkanten (13) nach außen vorstehende Lagerzapfen (14) zum Einrasten in Aufnahmen (15, 16) an der Innenseite der Behälterteile (1, 2) aufweisen.

6. Behälter nach Anspruch 5, **dadurch gekennzeichnet, dass** die Aufnahmen (15, 16) einen an der Innenseite eines Rands (4, 5) der Behälterteile (1, 2) an geformten Steg (23, 26) mit einer Lagerschale (24, 27) für den Lagerzapfen (14) und nach innen ragenden Rastnasen (25, 28) zur Halterung des Lagerzapfen (14) aufweisen.

7. Behälter nach Anspruch 6, **dadurch gekennzeichnet, dass** am Rand (5) des Behälterteils (2) oberhalb der Lagerschale (27) eine V-förmige Einführungsnut (29) angeordnet ist.

8. Behälter nach einem der Ansprüche 6 oder 7, **dadurch gekennzeichnet, dass** die Lagerschalen (24; 27) für die Lagerzapfen (14) einen vorgegeben Abstand von den Deck- oder Bodenplatten (6, 7) der Behälterteile (1, 2) aufweisen.

9. Behälter nach einem der Ansprüche 5 bis 8, **dadurch gekennzeichnet, dass** an der Innenseite mindestens eines Behälterteils (1, 2) seitlich verschwenkbare Haltezungen (31) zur Halterung eines Booklets angeordnet sind.

10. Behälter nach einem der Ansprüche 4 bis 9, **dadurch gekennzeichnet, dass** die zentrale Aufnahmeöffnung (17) eine sechseckige Form ausweist.

11. Behälter nach einem der Ansprüche 1 bis 10, **dadurch gekennzeichnet, dass** die seitlichen Aufnahmeöffnungen (18) eine achteckige Form aufweisen.
